# EUROPÄISCHE PATENTSCHRIFT

(11) **EP 2 142 428 B1**
(45) Veröffentlichungstag und Bekanntmachung des Hinweises auf die Patenterteilung: **29.09.2010**
(21) Anmeldenummer: 08734750.6
(22) Anmeldetag: 25.03.2008
(51) Int. Cl.: B64D 11/06, B60N 2/015

(54) **VORRICHTUNG ZUM FESTLEGEN VON GEGENSTÄNDEN**
DEVICE FOR THE FIXATION OF OBJECTS
DISPOSITIF SERVANT A FIXER DES OBJETS

(30) Priorität: 22.03.2007 DE 102007014420; 25.03.2008 DE 102008015639
(43) Veröffentlichungstag der Anmeldung: 13.01.2010
(73) Patentinhaber: allsafe Jungfalk GmbH & Co. KG, 78234 Engen (DE)
(72) Erfinder: STUBBE, Ingolf, 78244 Gottmadingen (DE)
(74) Vertreter: Weiss, Peter
(86) Internationale Anmeldenummer: PCT/EP2008/002343
(87) Internationale Veröffentlichungsnummer: WO 2008/113610

(56) Entgegenhaltungen:
- EP-A- 0 922 605
- EP-A- 1 892 142
- DE-A1- 19 851 392
- DE-U1-202005 010 919
- GB-A- 2 219 493

## Beschreibung

Die Erfindung betrifft eine Vorrichtung zum Festlegen von Gegenständen an einer Schiene, insbesondere von Trennwänden in einem Fahrzeug oder Sitzen zur Personenbeförderung (zu Land, Wasser und Luft), wobei sich in der Schiene eine in Längsrichtung verlaufende Nut befindet.

### STAND DER TECHNIK

In vielen Bereichen des täglichen Lebens ist es notwendig, Gegenstände festzulegen, wobei die Position ggf. zuvor justiert werden muss. Die vorliegende Erfindung bezieht sich auf alle möglichen Anwendungen, soll jedoch bevorzugt bei der Festlegung von Fahrzeugsitzen verwendet werden. Dies soll aber nicht einschränkend sein.

Fahrzeugsitze in üblichen PKWs sind an kurzen Schienenstreifen festgelegt, wobei hier verschiedene Rastmittel verwendet werden. Als Beispiel wird auf die DE 102 24 454 A1 verwiesen. Bei Flugzeugen ist es bekannt, die Sitze an parallel verlaufenden Schienen festzulegen. Hierzu sind spezielle Sitzbefestigungen erforderlich, wobei die Festlegung meistens durch Verschrauben erfolgt.

Aus dem Bereich der Beförderungsfahrzeuge, wie dem Omnibusbau, ist vor allem die wandseitige Sitzbefestigung bekannt, wie sie beispielsweise in der DE-OS 27 15 548 beschrieben ist.

Dokument DE 19851392, der als nächstliegender Stand der Technik betrachtet wird, offenbart alle Merkmale des Oberbegriffs des Anspruchs 1.

Alle diese Sitzbefestigungen sind schwer zu handhaben, so dass in der Regel ein Verschieben des Sitzes nicht erfolgt. Heute wird dies jedoch vermehrt auch im Omnibusbau gefordert, da der Omnibus nicht nur dem Personentransport, sondern auch dem Transport von beispielsweise mitgeführten Fahrrädern usw. dienen soll.

### AUFGABE

Aufgabe der vorliegenden Erfindung ist es, eine Vorrichtung der o.g. Art zu entwickeln, die eine sichere Festlegung des Gegenstandes, aber auch ein leichtes Lösen ermöglicht.

### LÖSUNG DER AUFGABE

Zur Lösung der Aufgabe führt, dass dem Gegenstand eine mittels eines Hebels lösbare Klemmeinrichtung zugeordnet ist.

Das bedeutet, dass anstelle von umständlichen Verschraubungen die Festlegung nunmehr durch die Betätigung eines Hebels erfolgt. Ein Hebel kann schnell bewegt werden, so dass eine Handhabung des Gegenstands wesentlich erleichtert ist.

Die Klemmeinrichtung soll einen Gleitschuh aufweisen, der in die Nut eingreift. Dieser Gleitschuh muss so ausgestaltet sein, dass er eine klemmende Wirkung erzielen kann. Beispielsweise könnte dies durch Spreizen in der Nut geschehen. Bevorzugt ist aber in der Nut eine Hinterschneidung vorgesehen, in die zumindest ein Teil des Gleitschuhs eingreifen kann, so dass er zusammen mit beispielsweise einem Schienenstreifen eine Randkante der Nut zwischen sich aufnimmt und einklemmt. Hierzu muss allerdings der Gleitschuh eine Bewegung durchführen können, was mit dem Hebel geschieht. Aus diesem Grunde ist der Gleitschuh an einem Führungsstempel angeordnet, der den eben erwähnten Schienenstreifen durchsetzt, wobei an dem dem Gleitschuh gegenüberliegenden Ende des Führungsstempels der Hebel angelenkt ist.

In einem bevorzugten Ausführungsbeispiel weist nun dieser Hebel ein exzentrisches Element auf, mit dem beim Drehen des Hebels der Führungsstempel bewegt werden kann. Beispielsweise ist dies eine Drucknase, die im Verhältnis zur Drehachse exzentrisch ausgestaltet ist. Die Drucknase wirkt mit einer Druckmulde zusammen, in der sie beim Schwenken des Hebels gleitet.

Damit die Klemmwirkung noch abgefedert wird, sind zwischen Druckmulde und Schienenstreifen Tellerfedern vorgesehen, so dass ein Klappergeräusch auch nach mehrmaliger Benutzung der Klemmeinrichtung immer noch wirkungsvoll verhindert wird.

In einem bevorzugten Ausführungsbeispiel soll der Klemmeinrichtung noch eine Justiereinrichtung zugeordnet sein. Dies bedeutet, dass zuerst der Gegenstand die gewünschte Position einzunehmen hat, was über die Justiereinrichtung geschieht. Erst danach wird der Gegenstand durch die Klemmeinrichtung an der Schiene festgelegt. Die Justiereinrichtung kann dabei eine einfache Justierzunge sein, die ihren Platz in einer Nut der Schiene, bevorzugt Airline-Schiene, findet.

In einem bevorzugten Ausführungsbeispiel besteht die Justiereinrichtung im wesentlichen aus einem höhenverstellbaren Stempel, der mit einem Drehhebel zusammenwirkt. Dieser Stempel ist ähnlich wie der Führungsstempel auch in einer Öffnung in dem Schienenstreifen bewegbar. Allerdings kann er gänzlich in dem Schienenstreifen verschwinden, so dass er nicht mehr in Richtung der Schiene hervorsteht. Damit kann er beim Verschieben des Gegenstandes entlang der Schiene auch nicht stören.

Dieser Stempel ist zum Justieren in eine Öffnung in der Schiene einführbar. Diese Bewegung wird, unterstützt durch beispielsweise eine Schraubenfeder als Kraftspeicher, durch das Schwenken des Drehhebels um eine Drehachse bewirkt. Diese Drehachse durchsetzt ein Langloch in dem Stempel, so dass der Stempel gegenüber der Drehachse vertikal verschoben werden kann. Der Drehhebel selbst untergreift bevorzugt beidseits mit einer Kulisse jeweils eine Schulter an dem Stempel, wobei die Kulisse so ausgestaltet ist, dass bei einer Öffnungsbewegung des Drehhebels der Stempel angehoben wird. Beim Drehen des Drehhebels in die entgegengesetzte Richtung gleitet die Schulter entlang der Kulisse nach unten unter dem Druck der oben erwähnten Schraubenfeder.

Wenn somit der Gegenstand die gewünschte Position an der Schiene erreicht hat, wird die Justiereinrichtung gelöst, so dass der Stempel, sofern er nicht sofort in eine entsprechende Öffnung in der Schiene eingreift, auf der Schiene unter dem Druck der Schraubenfeder aufsteht. Wird jetzt der Gegenstand noch geringfügig entlang der Schiene verschoben, erreicht der Stempel die nächste ihm zugeordnete Öffnung an der Schiene und fährt in diese Öffnung ein. Erst danach wird die Klemmeinrichtung betätigt.

Bevorzugt bilden Klemmeinrichtung und Justiereinrichtung zusammen eine Einheit, die an dem Schienenstreifen festgelegt ist. Sie wird in einem gemeinsamen Gehäuse verborgen, wobei der Drehhebel für die Justiereinrichtung bevorzugt unter dem Hebel für die Klemmeinrichtung angeordnet ist. Letzterer wird in Klemmlage durch einen Splint od. dgl. festgelegt, so dass kein versehentliches Öffnen vorkommt. Damit ist aber auch gleichzeitig der Drehhebel der Justiereinrichtung geschützt.

Das Festlegens des Hebels der Klemmeinrichtung kann auch bspw. durch einen Verschlussmechanismus am Ende des Hebels bewirkt werden. Bspw. könnte hier ein bewegliches Blechstück eine Öffnung überdecken, wobei das Blechstück für den Entriegelungsvorgang verschoben werden muss. Das Blechstück ist dabei im Gehäuse integriert und mit einer Rückholfeder versehen, so dass es in Schliesslage gelangen möchte. Unter diesem Blechstück befindet sich dann in der Öffnung ein Schloss, welches mit einem Schlüssel geöffnet werden kann oder auch bspw. eine Vierkantschraube oder ein Schraubenbolzen, der mit einem Inbusschlüssel zusammenwirken kann. Hier sind viele Möglichkeiten denkbar und sollen von der Erfindung umfasst sein.

Die vorliegende Ausgestaltung der Vorrichtung hat nebenbei den Effekt, dass der Hebel ausserhalb der Airline-Schiene nicht abschliessbar ist. Dies ist darauf zurückzuführen, dass die Drehachse des Hebels der Klemmeinrichtung ausserhalb der Gebrauchslage einen anderen Abstand von dem Schienenstreifen einhält, als in Gebrauchslage in der Airline-Schiene. Ausserhalb der Gebrauchslage drückt das Tellerfederpaket die Drehachse in einen grösseren Abstand vom Schienenstreifen, so dass das Ende des Hebels nicht mit dem Gegenstück des Verschlusses am Schienenstreifen kongruiert.

Bei einem besonders bevorzugten Ausführungsbeispiel der Erfindung kann auch der Hebel der Klemmeinrichtung mit dem Drehhebel für die Justiereinrichtung verbunden sein, so dass beim Öffnen des Hebels auch der Drehhebel automatisch mit hochgezogen wird. Dies bedeutet einen grösseren Bedienkomfort. Die Verbindung kann bspw. durch ein seitliches Übergreifen des Hebels über den Drehhebel geschehen, wobei der Hebel quasi auf den Drehhebel aufgeclipst wird. Auch hier sind wieder viele Möglichkeiten denkbar. Bei einem weiteren bevorzugten Ausführungsbeispiel der Erfindung soll der Vorrichtung noch eine Einrichtung zum Ausgleichen von ungenauen Anordnungen von Bauteilen, insbesondere des Abstandes zwischen zweier Schienen zugeordnet sein. Hierzu umfangen den Führungsstempel zwei Exzenter, die zudem noch in sich exzentrisch geführt sind. Hierdurch ist die gesamte Vorrichtung wesentlich variabler gestaltet.

Als Schiene kommt vor allem eine Airline-Schiene in Frage, wie sie in der DE 299 12 413 U beschrieben ist. Diese Airline-Schiene eignet sich besonders zum Einbau in Flugzeuge, Busse, Schiffe oder ähnliche Transportmittel.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise aufgebrochen dargestellte Seitenansicht einer erfindungsgemässen Vorrichtung zum Festlegen eines Sitzfusses an einer Schiene;
Figur 2 eine perspektivische Seitenansicht der Vorrichtung gemäss Figur 1 jedoch ohne Sitzfuss und Schiene;
Figur 3 einen Längsschnitt durch die Vorrichtung gemäss Figur 2;
Figur 4 einen Längsschnitt durch die Vorrichtung gemäss Figur 2 jedoch ohne Gehäuse und Befestigung für Klemmeinrichtung und Justiereinrichtung;
Figur 5 eine Seitenansicht der Vorrichtung gemäss Figur 4;
Figur 6 eine Seitenansicht der Vorrichtung gemäss Figur 3 in Öffnungslage der Klemmeinrichtung;
Figur 7 eine Seitenansicht der Vorrichtung gemäss Figur 6 mit angehobener Justiereinrichtung;
Figur 8 eine perspektivische Ansicht der Vorrichtung gemäss Figur 7;
Figur 9 einen vergrössert dargestellten Ausschnitt aus Figur 8 im Bereich der Klemm- und Justiereinrichtung mit hervorgehobener Steuerkante einer Kulisse zum Anheben eines Stempels;
Figur 10 die Ansicht gemäss Figur 9 jedoch mit abgesenktem Justierstempel;

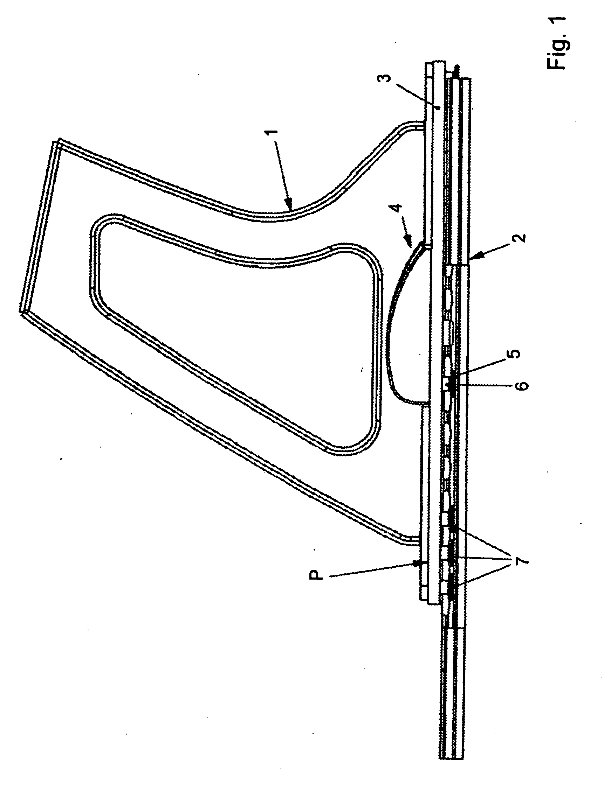

Gemäss Figur 1 ist eine erfindungsgemässe Vorrichtung P zum Festlegen eines Sitzfusses 1 an einer Airline-Schiene 2 dargestellt. Dabei sitzt auf einem Schienenstreifen 3 ein Gehäuse 4 auf, in dem sich eine weiter unten beschriebene Klemmeinrichtung und Justiereinrichtung für den Sitzfuss 1 befinden. Von der Klemmeinrichtung ist nur ein Gleitschuh 5 gezeigt, der an einem Führungsstempel 6 angeordnet ist. Ferner ragen von der Schiene an dem Schienenstreifen 3 weitere Gleitschuhe 7 ab, die in einer nicht näher gezeigten Nut der Airline-Schiene 2 gleiten.

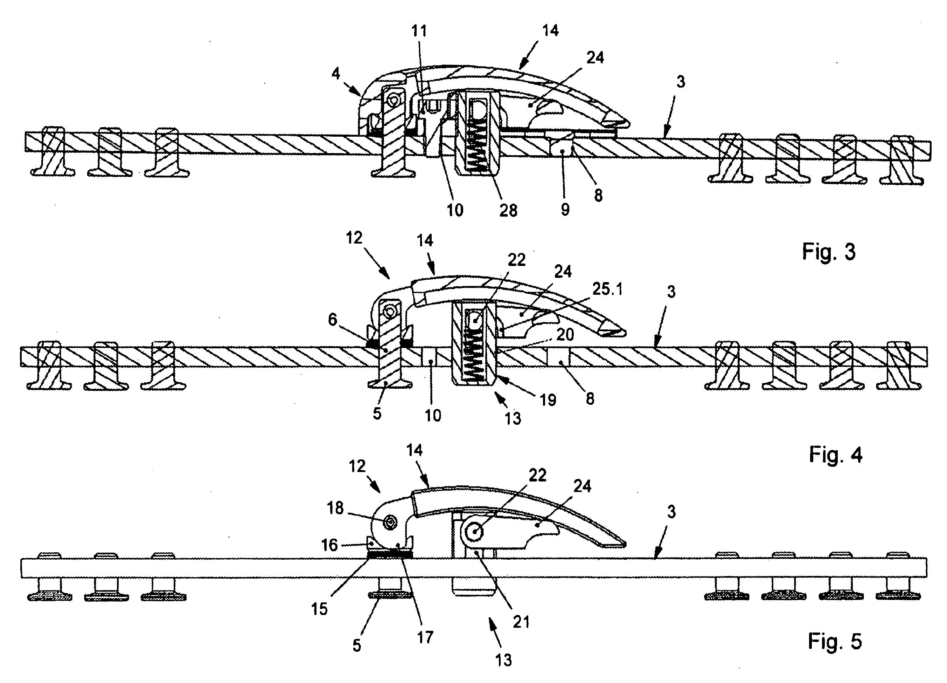

Wie in Figur 3 erkennbar, ist das Gehäuse 4 über einen in einem Loch 8 in dem Schienenstreifen 3 eingreifenden Justierbolzen 9 und einen in eine Gewindebohrung 10 in dem Schienenstreifen 3 eingreifenden Schraubenbolzen 11 an dem Schienenstreifen 3 befestigt.

In Figur 4 ist nun das Gehäuse mit den Justierbolzen und Schraubenbolzen weggelassen, so dass getrennt eine Klemmeinrichtung 12 und eine Justiereinrichtung 13 erkennbar sind. Für die Klemmeinrichtung 12 wirkt ein Hebel 14 mit dem Führungsstempel 6 zusammen. Dabei durchsetzt der Führungsstempel 6 den Schienenstreifen 3, ein Tellerfederpaket 15 und eine Druckmulde 16, in der eine Drucknase 17 (Figur 5) des Hebels 14 schwenken bzw. gleiten kann. Dabei ist der Führungsstempel 6 gegenüber dem Gleitschuh 5 über eine Drehachse 18 mit dem Hebel 14 verbunden.

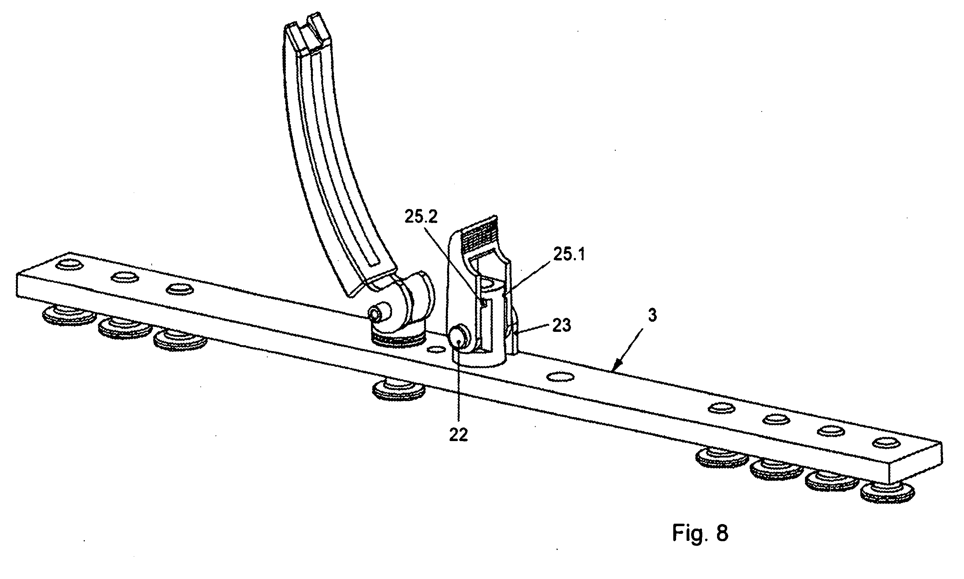

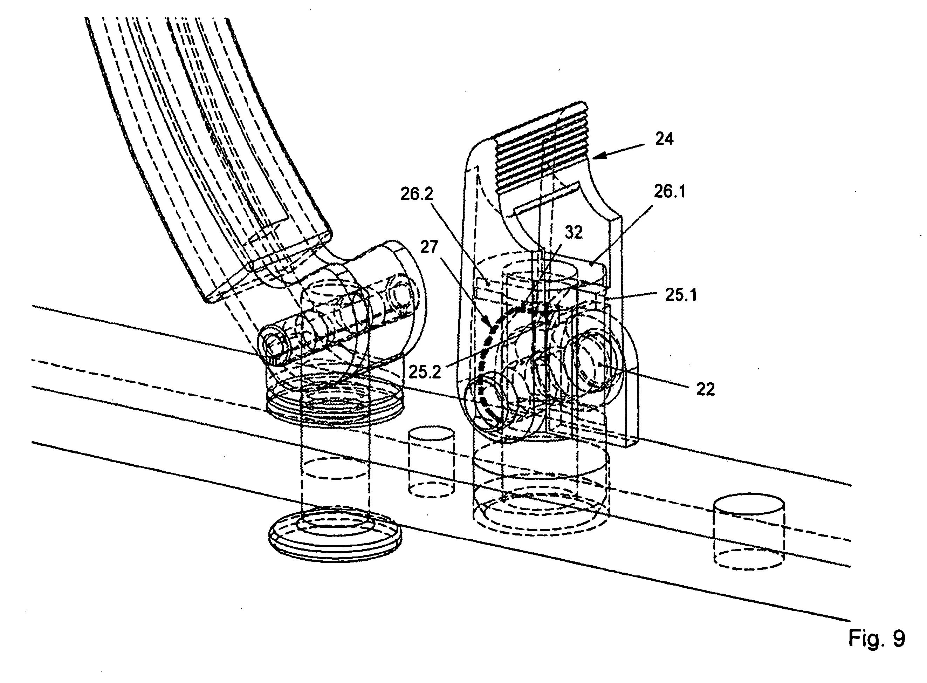

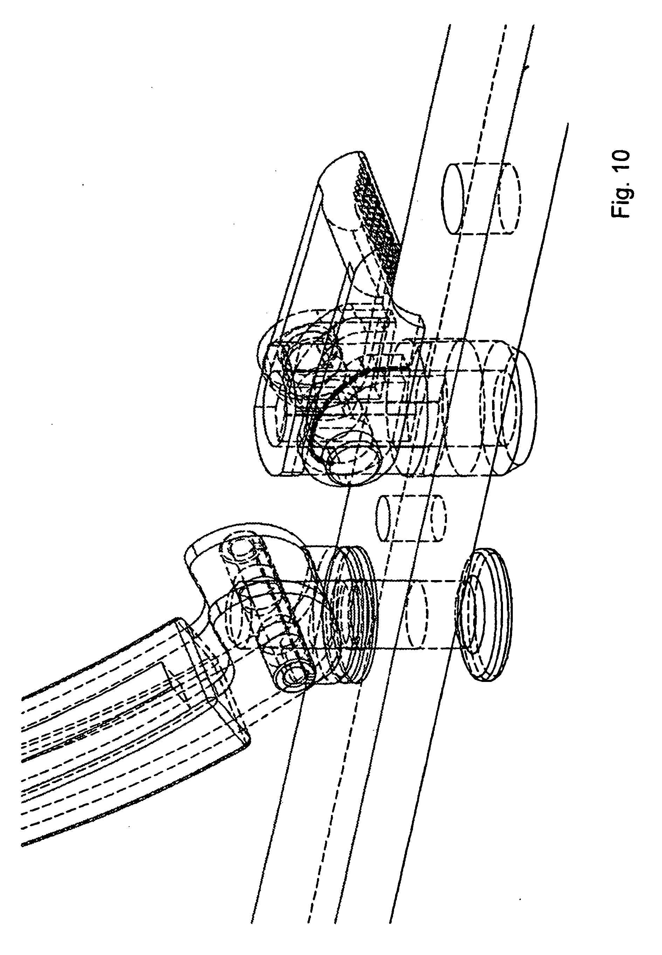

Die Justiereinrichtung 13 weist einen höhenverstellbaren Stempel 19 auf, der in einer seiner äusseren Kontur entsprechenden Öffnung 20 in dem Schienenstreifen 3 gleitet. Dieser Stempel 19 besitzt ein Langloch 21, welches ebenfalls vertikal verläuft und von einer Drehachse 22 durchsetzt wird. Diese Drehachse 22 ist an einem in Figur 8 gezeigten Lagerbock 23 festgelegt, der von dem Schienenstreifen 3 aufragt. Ferner ist an der Drehachse 22 ein Drehhebel 24 festgelegt, der um diese Drehachse 22 geschwenkt werden kann. Der Drehhebel 24 umgreift den Stempel 19 gabelförmig und bildet zu dem Stempel 19 hin jeweils beidseitig eine Kulisse 25.1 bzw. 25.2 aus, die jeweils eine am Stempel 19 gebildete seitliche Schulter 26.1 und 26.2 untergreifen. Die Ausgestaltung der Kulisse ist in den Figuren 9 und 10 besser erkennbar, wobei dort auch eine Steuerkante 27, die mit der Schulter 26.2 zusammenwirkt, hervorgehoben ist. Die Kulissen 25.1 und 25.2 sind im Zusammenwirken mit den Schultern 26.1 und 26.2 so ausgestaltet, dass sie bei einem Drehen des Drehhebels 24 um die Drehachse 22 herum den Stempel 19 anheben. Dies geschieht gegen die Kraft einer Schraubenfeder 28, die sich einerseits gegen die Drehachse 22 und andererseits gegen einen Stempelboden 29 abstützt.

Die Funktionsweise der vorliegenden Erfindung ist folgende:

Soll ein Fahrzeugsitz beispielsweise in einem Bus festgelegt werden, so sind in diesem Bus zwei voneinander beabstandete Airline-Schienen 2 vorgesehen, die sich parallel zueinander in Längsrichtung des Busses erstrecken. Diese Airline-Schiene 2 ist in der DE 299 12 413 U beschrieben, auf die Bezug genommen wird. Der Sitz ist nun beidseits nahe seinem jeweiligen Sitzfuss 1 mit einer erfindungsgemässen Vorrichtung P versehen.

Die Anordnung der Gleitschuhe 5 und 7 und des Stempels 19 ermöglicht nun ein Einsetzen des Sitzes an einer beliebigen Stelle der Airline-Schienen. Die Gleitschuhe 5 und 7 greifen im Bereich der sich gegenüberliegenden Randkantenmulden in die in Längsrichtung verlaufende Nut in der Airline-Schiene ein, so dass der Sitz bei angehobenem Stempel 19 entlang den Airline-Schienen 2 verschoben werden kann. Es ist z.B. möglich, sämtliche Sitze einer Sitzreihe nach vorne zu verschieben, so dass ein hinterer Bereich eines Busses als Frachtraum verwendet werden kann. Ferner ist natürlich auch möglich, den Sitz an beliebiger Stelle aus den Airline-Schienen 2 zu nehmen.

Bevorzugt ist im übrigen an der Unterseite des Schienenstreifens eine Gleithilfe angeordnet. Dies kann zum Beispiel ein eingeclipstes Gleitstück aus Kunststoff, ein selbstklebendes Kunststoffband oder auch ein Gleitmittel-Auftrag (z.B. Molykote) od. dgl. sein.

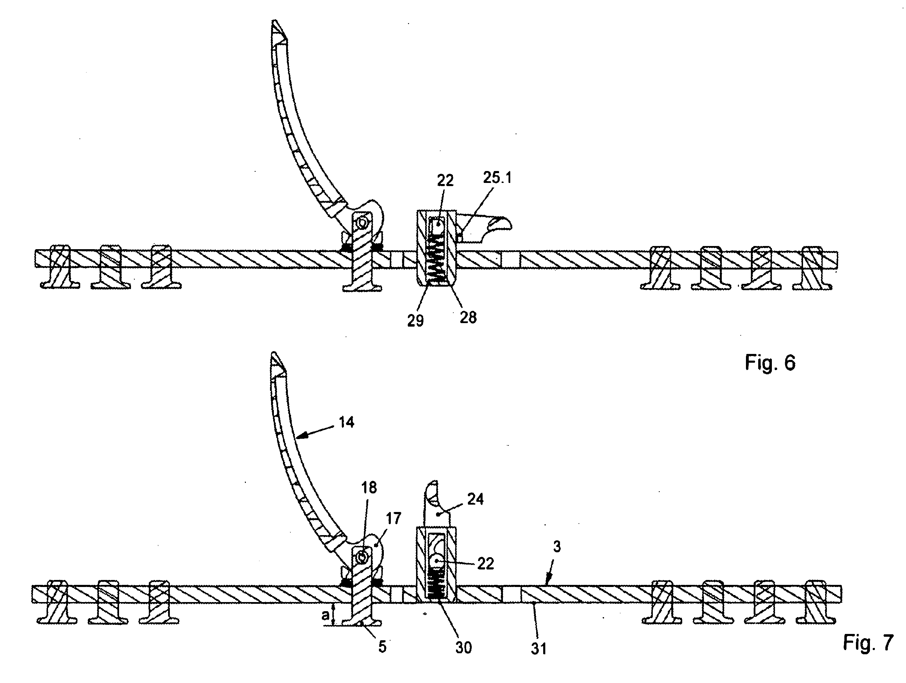

Zum Festlegen des Sitzes an einer gewünschten Position wird der Sitz entlang den Airline-Schienen 2 verschoben, wobei Klemmeinrichtung 12 und Justiereinrichtung 13 entsprechend Figuren 7, 8 und 9 gelöst sind. D.h., eine Stirnfläche 30 des Stempels 19 befindet sich in der Ebene einer Unterfläche 31 des Schienenstreifens 3. Der Gleitschuh 5 befindet sich in einer Lage, in welcher er einen weitesten Abstand a von dieser Unterfläche 31 des Schienenstreifens 3 einhält. In diesem Abstandsbereich a kann die Randkante der Airline-Schiene 2 unbeeinträchtigt gleiten.

Wird nun die gewünschte Position des Sitzes erreicht, wird die Justiereinrichtung 13 gelöst, wobei der Drehhebel 24 im Uhrzeigersinn um die Drehachse 22 geschwenkt wird. Dabei gleitet die Schulter 26.1 bzw. 26.2 des Stempels 19 entlang der jeweiligen Kulisse 25.1 bzw. 25.2 von einer der Drehachse 22 fernen Position zu einer der Drehachse 22 nahen Position, was gleichzeitig ein Absenken des Stempels 19 unter dem Druck der Schraubenfeder 28 bedeutet. Der Stempel 19 fährt so aus dem Schienenstreifen 3 aus und in eine kreisförmige, von den sich gegenüberliegenden Mulden gebildete Öffnung der Airline-Schiene 2 ein. Sollte dies beim ersten Anlauf noch nicht ordnungsgemäss geschehen, kann der Sitz entlang den Airline-Schienen 2 geringfügig verschoben werden, bis der Stempel 19 einrastet.

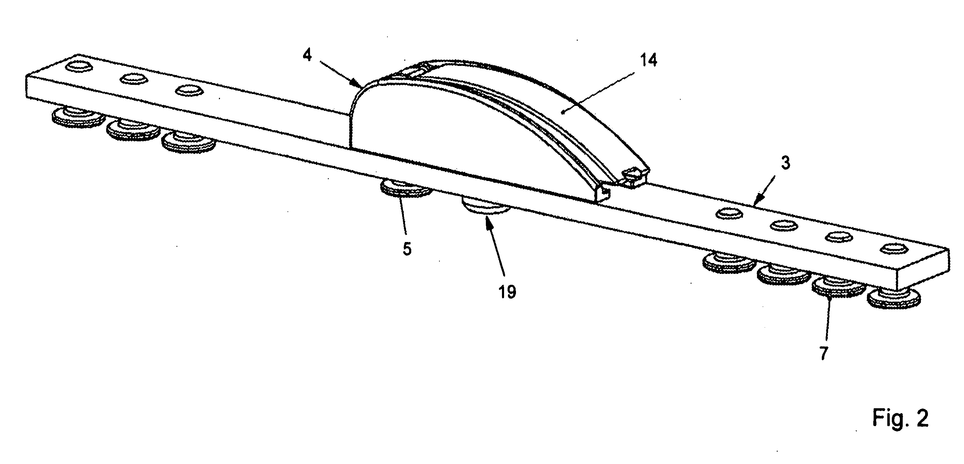

Als nächstes wird nun der Hebel 14 ebenfalls im Uhrzeigersinn um die Drehachse 18 gedreht, was bedeutet, dass die Drucknase 17 einen erhöhten Druck auf die Druckmulde 16 ausübt und damit den Führungsstempel 6 und mit diesem den Gleitschuh 5 anzieht. Da sich Teile des Gleitschuhs 5 in Hinterschneidungen der Nut der Airline-Schiene 2 befinden, und zwar im Bereich zwischen zwei benachbarten Mulden der Airline-Schiene, kommt es zu einem Klemmen der Randkanten der Airline-Schiene 2 zwischen Gleitschuh 5 und Unterfläche 31 des Schienenstreifens 3. Hierdurch ist nun der Schienenstreifen 3 zum einen durch den Stempel 19 gegen ein Verrutschen und zum anderen durch den Gleitschuh 5 gegen ein Klappern gesichert. In dieser Schliesslage überdeckt der Hebel 14, wie in Figur 2 und 3 gezeigt, den Drehhebel 24, so dass dieser gegen ein unbeabsichtigtes Lösen geschützt ist. In dieser Schliesslage kann der Hebel 14 noch bevorzugt durch einen Splint od. dgl. gesichert sein.

Zum Lösen des Sitzes wird der Hebel 14 gegen den Uhrzeigersinn geschwenkt, was bedeutet, dass der Zug auf den Gleitschuh 5 nachlässt. Danach wird der Drehhebel 24 ebenfalls gegen den Uhrzeigersinn geschwenkt, wodurch die Kulisse 25.1 und 25.2 im Zusammenwirken mit den Schultern 26.1 und 26.2 den Stempel 19 anheben und zwar gegen den Druck der Schraubenfeder 28. Gegen Ende der Drehbewegung weist die Kulisse 25.1 bzw. 25.2 eine Abflachung 32 auf, so dass die Schultern 26.1 bzw. 26.2 auf den Abflachungen 32 aufsitzen und der Drehhebel 24 in seiner vertikalen Lage verbleibt, ohne dass er speziell hier festgelegt werden muss. Der Fahrzeugsitz ist nun frei und kann entlang den Airline-Schienen 2 verschoben werden.

Vorzugsweise ist dem Flansch 34 ein Retainer 37 zugeordnet, der ein Justierelement 41 aufweist.

Vorzugsweise ist die Klemmeinrichtung 12 in einem Gehäuseteil 4 gelagert, welches die Klemmeinrichtung 12 an einem Schienenstreifen 3 zumindest teilweise überdeckt.

Vorzugsweise weist die Justiereinrichtung 13 einen höhenverstellbaren Stempel 19 auf, der in eine der Nut der Schiene 2 zugeordneten Öffnung einführbar ist.

Vorzugsweise ist der Stempel 19 zylindrisch und dementsprechend die Öffnung, die durch die Nut gebildet wird, etwa kreisrund.

Vorzugsweise ist dem Stempel 19 ein Drehhebel 24 zugeordnet.

Vorzugsweise dreht der Drehhebel 24 um eine Drehachse 22, die in dem Gehäuse 4 oder an einem separaten von dem Schienenstreifen 3 aufragenden Lagerbock 23 festgelegt ist.

Vorzugsweise durchsetzt die Drehachse 22 ein vertikales Langloch 21 in dem Stempel 19.

Vorzugsweise stüzt sich der Stempel 19 über einen Kraftspeicher 28 gegen die Drehachse 22 ab.

Vorzugsweise ist an dem Drehhebel 24 zumindest eine Kulisse 25.1, 25.2 vorgesehen, die sich von unten her gegen eine Schulter 26.1, 26.2 an dem Stempel 19 abstützt.

Vorzugsweise ist die Schiene 2 eine Airline - Schiene, welche eine in Längsrichtung verlaufende durchgehende beidseits hinterschnittene Nut aufweist, wobei in die Randkanten der Nut voneinander beabstanden aber mit sich gegenüberliegend Mulden versehen sind, die jeweils zusammen eine durch die Nut unterbrochene kreisrunde Öffnung ausbilden.

Vorzugsweise ist an dem Schienenstreifen 3 eine Mehrzahl von Gleitschuhen 7 vorgesehen.

Vorzugsweise ist an der Unterfläche 31 des Schienenstreifens 3 eine Gleithilfe vorgegeben.

### Bezugszeichenliste

| | | | | | |
|---|---|---|---|---|---|
| 1 | Sitzfuss | 34 | Flansch | 67 | |
| 2 | Airline-Schiene | 35 | Öffnung | 68 | |
| 3 | Schienenstreifen | 36 | Durchgriffsöffnung | 69 | |
| 4 | Gehäuse | 37 | Retainer | 70 | |
| 5 | Gleitschuh | 38 | Stift | 71 | |
| 6 | Führungsstempel | 39 | Streifen | 72 | |
| 7 | Gleitschuh | 40 | Öffnung | 73 | |
| 8 | Loch | 41 | Zentrierzunge | 74 | |
| 9 | Justierbolzen | 42 | Nut | 75 | |
| 10 | Gewindebohrung | 43 | Hammerkopf | 76 | |
| 11 | Schraubenbolzen | 44 | Schaft | 77 | |
| 12 | Klemmeinrichtung | 45 | Exzenter | 78 | |
| 13 | Justiereinrichtung | 46 | Retainer Deckel | 79 | |
| 14 | Hebel | 47 | Verriegler | | |
| 15 | Tellerfederpaket | 48 | Druckfeder | | |
| 16 | Druckmulde | 49 | Hülse | | |
| 17 | Drucknase | 50 | Öffnung | | |
| 18 | Drehachse | 51 | Exzenter | a | Abstand |
| 19 | Stempel | 52 | Ausnehmung | | |
| 20 | Öffnung | 53 | Öffnung | | |
| 21 | Langloch | 54 | | | |
| 22 | Drehachse | 55 | | | |
| 23 | Lagerbock | 56 | | P | Vorrichtung |
| 24 | Drehhebel | 57 | | | |
| 25 | Kulisse | 58 | | | |
| 26 | Schulter | 59 | | | |
| 27 | Steuerkante | 60 | | | |
| 28 | Schraubenfeder | 61 | | | |
| 29 | Stempelboden | 62 | | | |
| 30 | Stirnfläche | 63 | | | |
| 31 | Unterfläche | 64 | | | |
| 32 | Abflachung | 65 | | | |
| 33 | Wandausschnitt | 66 | | | |

## Patentansprüche

1. Vorrichtung zum Festlegen von Gegenständen (1, 33) an einer Schiene (2), insbesondere von Trennwänden in einem Fahrzeug oder Sitzen zur Personenbeförderung (zu Land, Wasser und Luft), wobei sich in der Schiene (2) eine in Längsrichtung verlaufende Nut (42) befindet, wobei dem Gegenstand (1, 33) eine lösbare Klemmeinrichtung (12) und eine Justiereinrichtung (13, 41) zugeordnet ist,
**dadurch gekennzeichnet,**
**dass** zum Betätigen der Klemmeinrichtung (12) und der Justiereinrichtung (13) jeweils ein separater Hebel (14) bzw. Drehhebel (24) vorgesehen ist.

2. Vorrichtung nach Anspruch 1, **dadurch gekennzeichnet, dass** der Hebel (14) und Drehhebel (24) ggf. lösbar miteinander verbunden sind.

3. Vorrichtung nach einem der Ansprüche 1 oder 2, **dadurch gekennzeichnet, dass** der Hebel (14) den Drehhebel (24) in Klemmlage überdeckt und abschirmt.

4. Vorrichtung nach wenigstens einem der Ansprüche 1 bis 3, **dadurch gekennzeichnet, dass** Klemmeinrichtung (12) und Justiereinrichtung (13) zusammen eine Einheit bilden, die an einem Schienenstreifen (3) festgelegt und von einem gemeinsamen Gehäuse (4) umfangen ist.

5. Vorrichtung nach wenigstens einem der Ansprüche 1 bis 4, **dadurch gekennzeichnet, dass** der Hebel (14) in Klemmlage festgelegt ist.

6. Vorrichtung nach wenigstens einem der Ansprüche 1 bis 5, **dadurch gekennzeichnet, dass** die Klemmeinrichtung (12) einen Gleitschuh (5), Hammerkopf (43) oder dergleichen Klemmelement aufweist, das in die Nut (42) eingreift und nach einem Verschieben oder Verdrehen zum Klemmen oder Verspannen die Nut (42) hintergreift.

7. Vorrichtung nach Anspruch 6, **dadurch gekennzeichnet, dass** das Klemmelement (5, 43) etwa kreis- oder teilkreisförmig ausgebildet ist und in zumindest eine seitliche durch die Nut gebildete Hinterschneidung eingreift.

8. Vorrichtung nach Anspruch 6 oder 7, **dadurch gekennzeichnet, dass** das Klemmelement (5 ,43) an einem Führungsstempel (6, 6.1) angeordnet ist, wobei an dem Klemmelement (5, 43) gegenüberliegenden Ende des Führungsstempels (6, 6.1) der Hebel (14, 14.1) angelenkt ist.

9. Vorrichtung nach Anspruch 8, **dadurch gekennzeichnet, dass** der Hebel (14, 14.1) eine im Verhältnis zu einer Drehachse (18, 18.1) exzentrische Drucknase (17) aufweist.

10. Vorrichtung nach Anspruch 9, **dadurch gekennzeichnet, dass** die Drucknase (17) mit einer zwischen Drehachse (18) und einem Schienenstreifen (3) vorgesehenen Druckmulde (16) zusammenwirkt.

11. Vorrichtung nach Anspruch 10, **dadurch gekennzeichnet, dass** sich die Druckmulde (16) über Tellerfedern (15) gegen den Schienenstreifen (3) abstützt.

12. Vorrichtung nach Anspruch 9, **dadurch gekennzeichnet, dass** sich der Hebel (14.1) auf Tellerfedern (15.1) abstützt.

13. Vorrichtung nach Anspruch 12, **dadurch gekennzeichnet, dass** unter den Tellerfedern (15.1) eine Druckfeder (48) in einem Verriegler (47) zugeordnet ist.

## Claims

1. A device for fixing objects (1, 33) to a rail (2), in particular partitions in a vehicle or seats for carrying passengers (on land, water and in the air), with a groove (42) extending in the longitudinal direction being located in the rail (2), a releasable clamping means (12) and an adjusting means (13, 41) being associated with the object (1, 33),
**characterised in that**
a separate lever (14) or rotary lever (24) is provided in each case for actuating the clamping means (12) and the adjusting means (13).

2. A device according to Claim 1, **characterised in that** the lever (14) and rotary lever (24) are optionally releasably connected to one another.

3. A device according to one of Claims 1 or 2, **characterised in that** the lever (14) covers and shields the rotary lever (24) in the clamping position.

4. A device according to at least one of Claims 1 to 3, **characterised in that** the clamping means (12) and the adjustment means (13) together form a unit which is fixed to a rail strip (3) and is surrounded by a common housing (4).

5. A device according to at least one of Claims 1 to 4, **characterised in that** the lever (14) is fixed in the clamping position.

6. A device according to at least one of Claims 1 to 5, **characterised in that** the clamping means (12) has a sliding block (5), hammer head (43) or similar clamping element which engages in the groove (42) and after displacement or twisting engages behind the groove (42) for clamping or bracing.

7. A device according to Claim 6, **characterised in that** the clamping element (5, 43) is approximately circular or in the shape of part of a circle, and engages in at least one lateral undercut formed by the groove.

8. A device according to Claim 6 or 7, **characterised in that** the clamping element (5, 43) is arranged on a guide plunger (6, 6.1), with the lever (14, 14.1) being articulated to the end of the guide plunger (6, 6.1) opposite the clamping element (5, 43).

9. A device according to Claim 8, **characterised in that** the lever (14, 14.1) has a pressure nose (17) which is eccentric relative to a rotation spindle (18, 18.1).

10. A device according to Claim 9, **characterised in that** the pressure nose (17) cooperates with a pressure trough (16) provided between the rotation spindle (18) and a rail strip (3).

11. A device according to Claim 10, **characterised in that** the pressure trough (16) is supported against the rail strip (3) via plate springs (15).

12. A device according to Claim 9, **characterised in that** the lever (14.1) is supported on plate springs (15.1).

13. A device according to Claim 12, **characterised in that** a pressure spring (48) is associated in a locking means (47) beneath the plate springs (15.1).

## Revendications

1. Dispositif servant à fixer des objets (1, 33) à un rail (2), en particulier de cloisons dans un véhicule ou des sièges pour le transport de personnes (par terre, eau et air), dans le rail (2) se trouvant une rainure (42) s'étendant dans le sens longitudinal, à l'objet (1, 33) étant associés un dispositif de serrage amovible (12) et un dispositif d'ajustage (13, 41),
**caractérisé par le fait**
**qu'**il est prévu, pour la fixation du dispositif de serrage (12) et du dispositif d'ajustage (13), chaque fois un levier (14) ou levier rotatif (24) séparé.

2. Dispositif selon la revendication 1, **caractérisé par le fait que** le levier (14) et le levier rotatif (24) sont éventuellement connectés de manière amovible l'un à l'autre.

3. Dispositif selon l'une des revendications 1 ou 2, **caractérisé par le fait que** le levier (14) recouvre et abrite le levier rotatif (24) en position de serrage.

4. Dispositif selon au moins l'une des revendications 1 à 3, **caractérisé par le fait que** le dispositif de serrage (12) et le dispositif d'ajustage (13) forment, ensemble, une unité qui est fixée à une bande de rail (3) et entourée d'un boîtier commun (4).

5. Dispositif selon au moins l'une des revendications 1 à 4, **caractérisé par le fait que** le levier (14) est fixé en position de serrage.

6. Dispositif selon au moins l'une des revendications 1 à 5, **caractérisé par le fait que** le dispositif de serrage (12) présente un patin (5), un blochet (43) ou élément de serrage similaire qui s'engage dans la rainure (42) et qui, après un déplacement ou une déformation pour le calage ou le serrage, vient en prise derrière la rainure (42).

7. Dispositif selon la revendication 6, **caractérisé par le fait que** l'élément de serrage (5, 43) est réalisé de forme environ circulaire ou en partie de cercle et s'engage dans au moins une contre-dépouille latérale formée par la rainure.

8. Dispositif selon la revendication 6 ou 7, **caractérisé par le fait que** l'élément de serrage (5, 43) est disposé sur un poinçon de guidage (6, 6.1), le levier (14, 14.1) étant monté articulé à l'extrémité du poinçon de guidage (6, 6.1) opposé à l'élément de serrage (5, 43).

9. Dispositif selon la revendication 8, **caractérisé par le fait que** le levier (14, 14.1) présente un ergot de pression (17) excentrique par rapport à un axe de rotation (18, 18.1).

10. Dispositif selon la revendication 9, **caractérisé par le fait que** l'ergot de pression (17) coopère avec une cuvette de pression (16) prévue entre l'axe de rotation (18) et une bande de rail (3).

11. Dispositif selon la revendication 10, **caractérisé par le fait que** la cuvette de pression (16) s'appuie, par l'intermédiaire de rondelles Belleville (15), contre la bande de rail (3).

12. Dispositif selon la revendication 9, **caractérisé par le fait que** le levier (14.1) s'appuie sur des rondelles Belleville (15.1).

13. Dispositif selon la revendication 12, **caractérisé par le fait que** sous les rondelles Belleville (15.1) un ressort de pression (48) est associé à un dispositif de verrouillage (47).
